# EUROPEAN PATENT APPLICATION

(11) **EP 1 209 617 A2**
(43) Date of publication of application: **29.05.2002**
(21) Application number: 01309275.4
(22) Date of filing: 31.10.2001
(51) Int. Cl.: G06N 5/04

(54) **Information processing method and information processing apparatus**

(30) Priority: 31.10.2000 JP 2000333973
(71) Applicant: Kabushiki Kaisha Toshiba, Tokyo 105-8001 (JP)
(72) Inventor: Cho, Kenta, c/o Intellectual Property Division, Minato-ku, Tokyo 105-8001 (JP); Kase, Naoki, Intellectual Property Division, Minato-ku, Tokyo 105-8001 (JP)
(74) Representative: Granleese, Rhian Jane

(57) **Abstract**

An information processing method of executing an information process to solve a provided preposition by at least one information processing apparatus having a resource comprises preparing a plurality of plans to solve the preposition, each of the plans including at least one process step, selecting one executable plan among the plans according to the resource of the information processing apparatus, and executing the process step included in the selected plan.

## Description

The present invention relates to an information processing method which utilizes an intelligent agent that acts for the user, and an information processing apparatus which utilizes the same, particularly to an information processing method and an information processing apparatus that enable the intelligent agent to perform in a portable information terminal, such as a PDA (Personal Digital Assistant) and a mobile telephone, that is limited in its resource.

An intelligent agent system has been known as a technique for acting for the user in information processing in an information terminal. An agent is a unit of processing in software, provided as a program, and acts in autonomic in response to surrounding situations. The intelligent agent system is a system in which such an agent performs information processing in place of the user in an information terminal.

The intellectual agent stores a demand from the user in a certain mode of expression, and performs intellectual processing for achieving the demand from the user. Such an intellectual processing calls for an information terminal having a vast resource (in terms of memory capacity and processing ability of the CPU). For this reason, it has been impossible to have the intellectual agent operate in an information processing environment of an information terminal that has only limited resources (mini resources) (such as a small memory capacity and a low processing ability of the CPU).

Conventionally, in order to allow the intelligent agent to act in the information terminal, a platform is built that provides an environment in which the agent will perform processes. The platform includes a certain number of components (programs). In the agent, the demand from the user is managed by a goal script. The goal script includes an array of goals for which processing requests of the platform will be made. Each of the goals in the goal script makes an access to a corresponding component (program) on the platform, whereby a process for achieving the goal is performed on the platform.

With the above, an amount of resource available for the component on the platform is limited by the information terminal in which the platform resides. Especially, in the platform of a portable information terminal such as a PDA and a mobile telephone, only a small memory is available for the information processing, with the processing ability of the CPU not ideally high. Yet, even under such a condition, the agent operates without any consideration to such limitations as an amount of resource (mainly memory resource) available on the platform, an amount of resource to be used by each of the components, and an expected amount of resource necessary for achieving each of the goals.

Thus, the agent attempts to use a component that requires a large amount of resource, in an information terminal limited in the resource. As a result, the resource is exhausted, resulting in a failure of the agent to perform properly.

It is an object of the present invention to provide an information processing method capable of running the agent in resource-poor terminals such as a mobile telephone and a PDA, and to provide an information processing apparatus.

According to an aspect of the present invention, there is provided an information processing method of executing an information process to solve a provided preposition by at least one information processing apparatus having a resource, the method comprising: preparing a plurality of plans to solve the preposition, each of the plans including at least one process step; selecting one executable plan among the plans according to the resource of the information processing apparatus; and executing the process step included in the selected plan.

According to another aspect of the invention, there is provided an information processing apparatus performing information processing by at least one information processing device which has a platform executing a plurality of processes to solve a provided preposition, using an agent to request execution of the processes to the platform in stead of the user, the apparatus comprising: a planner configured to generate, in the platform, the plurality of processes to solve the preposition; a sender configured to send a plurality of plans for execution of the processes from the platform to the agent to store them therein; a selector configured to select, by the agent, one plan executable by the information processing device from the plans; and a request device configured to request execution of the process of the selected plan from the agent to the platform.

According to another aspect of the invention, there is provided a method of performing an information processing by at least one information processing apparatus which has a platform executing a plurality of processes to solve a provided preposition, using an agent to request execution of the processes to the platform in stead of the user, the method comprising:
executing a plurality of processes to solve the preposition; sending a plurality of plans for execution of the processes to the agent to store it therein; and receiving a request for execution of the process of one plan executable by the information processing apparatus from the agent.

According to another aspect of the invention, there is provided a method of performing an information processing by at least one information processing device which has a platform executing a plurality of processes to solve a provided preposition, using an agent to request execution of the processes to the platform in stead of the user, the method comprising: storing a plurality of plans for execution of the plurality of processes to solve the preposition; selecting one plan executable by the information processing device from the plans; and requesting execution of the process of the selected plan to the platform in stead of the user.

The present invention can be implemented either in hardware or on software in a general purpose computer. Further the present invention can be implemented in a combination of hardware and software. The present invention can also be implemented by a single processing apparatus or a distributed network of processing apparatuses.

Since the present invention can be implemented by software, the present invention encompasses computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.

This summary of the invention does not necessarily describe all necessary features so that the invention may also be a sub-combination of these described features.

The invention can be more fully understood from the following detailed description when taken in conjunction with the accompanying drawings, in which:
Fig. 1 is a block diagram of an information processing apparatus according to a first embodiment of the present invention;
Fig. 2 is a flowchart for illustrating a basic processing operation of the information processing apparatus according to the first embodiment of the present invention;
Fig. 3 is a diagram showing an example of a plan tree;
Fig. 4 is a diagram showing a plan including a plurality of goals;
FIG. 5 is a diagram showing a plan including only one goal;
FIG. 6 is a diagram showing a plan tree profile;
FIG. 7 is a diagram showing a platform profile;
FIG. 8 is a diagram showing a component profile;
FIG. 9 is a diagram showing a registration table of components;
FIG. 10 is a block diagram of an information processing apparatus according to a second embodiment of the present invention;
FIG. 11 is a diagram showing agent knowledge;
FIG. 12 is a diagram showing another plan tree profile;
FIG. 13 is a flowchart for illustrating a plan validity determination processing operation;
FIG. 14 is a block diagram showing a principal portion of an information processing apparatus according to a third embodiment of the present invention;
FIG. 15 is a flowchart for illustrating a processing operation in a migration component; and
FIG. 16 is diagram for illustrating an example of how the present invention can be utilized.

Hereinafter, embodiments of the present invention will be described with reference to the drawings.

### (First Embodiment)

### (1) Configuration of the Information Processing Apparatus

As a first embodiment of the present invention, description will cover functions of an agent (agent system) and functions of a platform, for information processing to achieve a demand from the user in an information processing environment (mini resources) in which a memory has a small capacity and a CPU has a low processing ability.

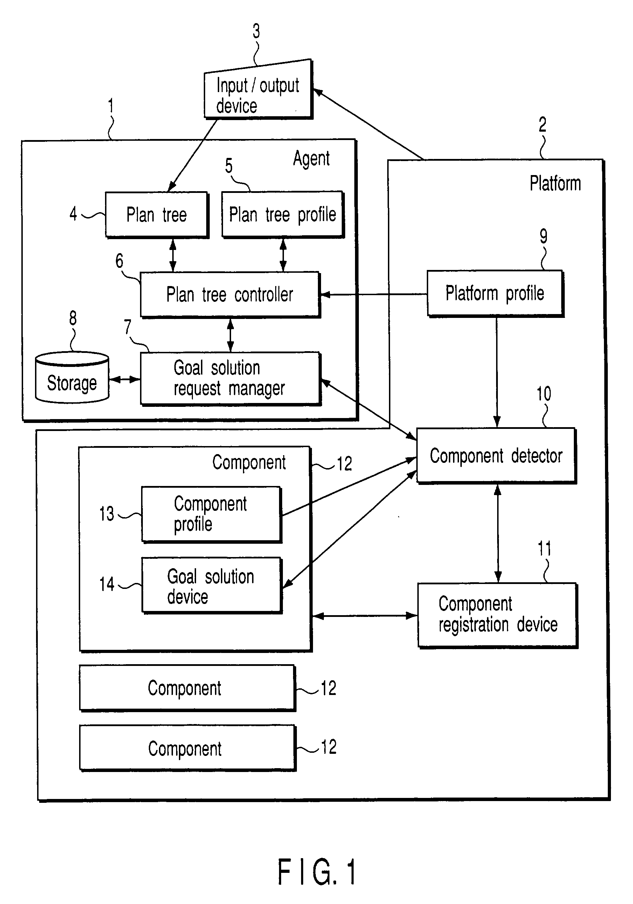

FIG. 1 shows a functional configuration of an information processing apparatus according to the first embodiment of the present invention. The information processing apparatus is built in a portable information terminal (information instrument) having mini resources such as a personal computer, a PDA and a mobile telephone. A platform 2 operates in an execution environment provided in the information processing apparatus. An agent 1 operating in an execution environment provided in the platform 2 receives a proposition inputted by the user, and requests the platform 2 to carry out a process for solving the proposition.

The platform 2 has a plurality of components 12 for executing the process (or part of the process) requested by the agent 1. The platform 2 provides an execution environment for the agent 1 and the components 12 to operate.

The components 12 include, for example, a component that executes a process to establish a connection to Internet, a component that executes a process to generate a character string necessary for requesting a search engine to perform an information search, a component that executes a process to make an inquiry of the search engine (i.e. to have the engine search) using the generated character string, a component that executes a process to obtain a web page, a component that executes a process to make the obtained web page displayable, and a component that executes a process to make an inquiry of the user. The components 12, however, are not limited to those listed above. For example, a process executed by one of the above components may be divided into a plurality of sub-processes, and each of the sub-processes may represent an individual component. More specifically, for example, in order to obtain a web page, it is necessary to first connect to Internet, and then to specify a URL thereby obtaining the desired web page. These two stages in the process may be performed by two individual components respectively. Further, the component for connecting to Internet may include a subcomponent for connecting to Internet via a dedicated communication line and a subcomponent for connecting to Internet via a phone line.

For example, a personal computer has a large number of components. However, a portable information terminal is provided with a minimum necessary number of components due to its design limitation.

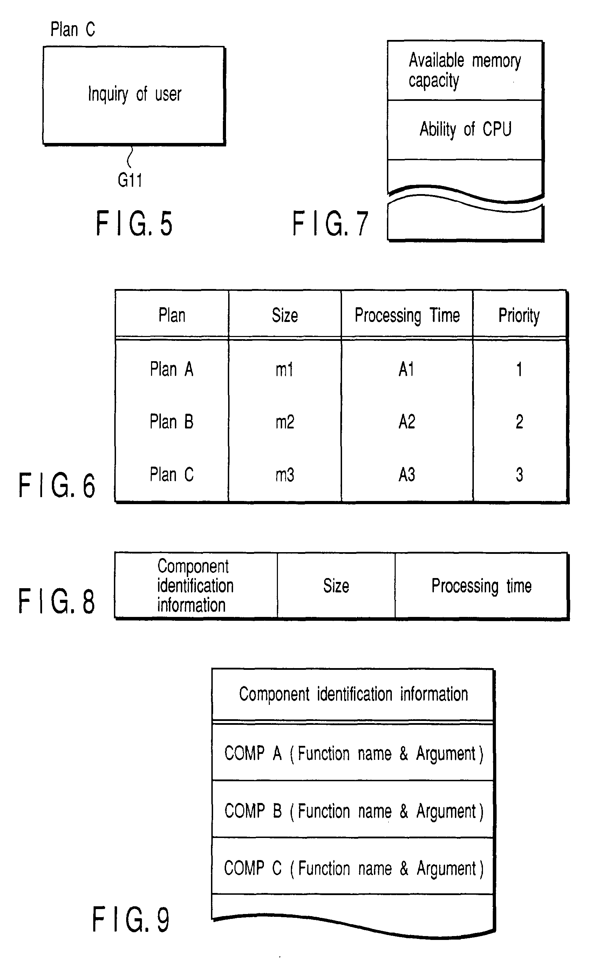

The platform 2 can register, as shown in FIG. 9 for example, identification information of the components 12 on a component registration device 11, as necessary. The component identification information that allows identification of the process performed by the component may be e.g. a combination of a function name and an argument, or a function name itself.

The agent 1 stores a plurality of solution methods for solving the proposition inputted by the user. Each solution method includes a process request (goal) of at least one processing stage to be requested of the platform. In each of these solving methods, a plurality of plans is stored in the form of a plan tree, at a plan tree storage 4. Information related to each of the plans is stored in the form of plan tree profile, at a plan tree profile storage 5.

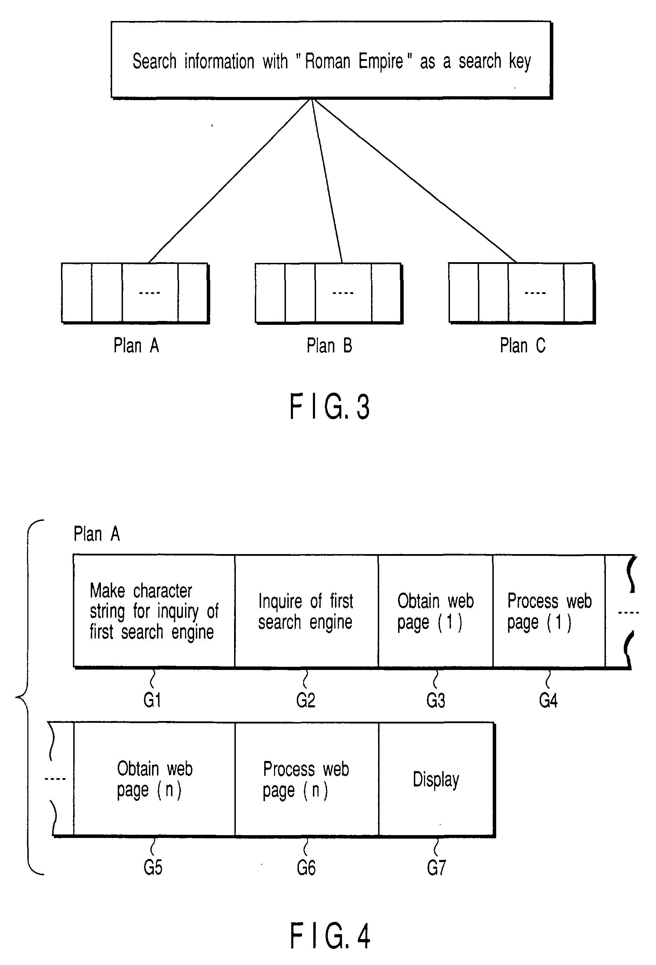

Here, there will now be described the plan, the plan tree, and the plan tree profile. Assume that the proposition inputted by the user is "Search for information, with "Roman Empire" as the search key." FIG. 3 shows a plan tree prepared for this proposition. According to FIG. 3, three plans (Plan A, Plan B and Plan C) are made in response to the proposition. These plans are interconnected as branches of the proposition inputted by the user, forming a plan tree.

Each of the plans has contents such as shown in FIG. 4. FIG. 4 shows what is contained in Plan A in FIG. 3. Plan A includes a request for processing a plurality of processing stages, i.e. an array of goals, to be requested of the platform 2 for solving the proposition.

In FIG. 4, the solving method prepared in Plan A for solving the proposition includes: Goal G1 which is a process for generating a character string necessary for requesting of a first search engine as one of a plurality of search engines for a search; Goal G2 which is a process for executing the search by the first search engine using the generated character string; Goal G3 which is a process for obtaining the first of web pages found by the search; Goal G4 which is a process for making displayable the obtained web page; ...; Goal G5 which is a process for obtaining the n-th of web pages found by the search; Goal G6 which is a process for making displayable the obtained web page; and Goal G7 which is a process for displaying the prepared web pages. Note that, specifically, each of these goals is e.g. a function name and its argument (called component identification information, according to the present embodiment) of a process called by a corresponding one of the goals.

The goals included in the plan A are sequentially solved (processed), in the order as described above, by appropriate ones of the components 12 on the platform 2, whereby web pages containing information related to "Roman Empire" are displayed on a display screen of the information processing apparatus. In other words, the proposition has been solved.

Plan B is for a search using another search engine (a second search engine) which is different from the one used in Plan A. Otherwise, contents of the plan are generally the same as shown in FIG. 4.

As shown in FIG. 5, Plan C includes Goal 11 which is a process for making an inquiry of the user. For example, if the given proposition is not solved by the execution of Plan A, then as an alternative solution attempt, Plan B is executed, and if Plan B still cannot solve the proposition, then Plan C is executed, thereby soliciting the user for a decision as to the next action to take.

As shown in FIG. 6 for example, the plan tree profile describes for each of the plan trees and for each of the plans included in the plan tree, such information as overall program size (kilo bytes) of the components expected to be used for executing the entire plan, and an amount of processing time necessary when the entire plan is executed on the platform 2 on which the agent 1 is operating. Further, the plan tree profile may include priority information based on which of Plan A and Plan B can give a search result of a higher quality. The profile information is provided by a planner component which is a component characteristic to the aspect of the present invention and will be described later.

In FIG. 6, since the first search engine used in Plan A is superior to the second search engine used in Plan B, Plan A is given a higher priority than Plan B.

The plan tree and plan tree profile are controlled by a plan tree controller 6. Specifically, registration deletion, rewriting and so on of these data are performed.

The plan tree controller 6 makes reference to a plan tree profile stored in a storage 5 and the platform profile of the platform 2 on which the agent 1 is now operating, and selects a plan from a plan tree shown in e.g. FIG. 3, takes a goal not solved yet, out of the selected plan, and generates a goal solution request for requesting the platform 2 to solve this unsolved goal. The platform 2 that receives the process goal through the goal solution request, selects one or a plurality of components in order to solve (process) the goal, and let one or plural components to execute the process.

The platform profile is stored in a platform storage 9 of the platform 2, and includes information about the current execution environment of the platform 2 (at least an execution environment of the information terminal in which the platform resides), and includes such information as shown in FIG. 7, as currently available memory capacity (a capacity of a memory currently mounted (an amount of memory resource)), and ability of the CPU (speed for example).

The plan tree controller 6 makes reference to the platform profile and the plan tree profile as shown in FIG. 7, of the platform 2, and selects a plan that has a size loadable in the memory area currently available for the platform 2 and has the shortest processing time or the highest priority. Further, the plan tree controller 6 sequentially takes, out of the selected plan, a goal not achieved yet, and generates a goal solution request including at least the content of the goal (at least the component identification information).

The goal solution request is sent to a goal solution request manager 7, and from there sent to a component detector 10 in the platform 2.

Each of the components 12 included in the platform 2 and run in the platform 2 provided as the execution environment includes a component profile storage 13 for storing a component profile, and a goal solution device 14. The goal solution device 14 executes, for example, a program that includes process description as the given component.

As shown in FIG. 8 the component profile includes, for example, such information as identification information of the corresponding component, size of the component itself, size of work area necessary for execution of a process specific to the component, or a total value of these two (hereinafter, this total value will be simply called memory required quantity of the component, for simplicity), and an amount of processing time necessary when the component is executed on the platform 2.

The component detector 10 of the platform 2 detects a component suitable for solving the goal included in the goal solution request. Each goal in each plan on the plan tree includes component identification information, i.e. a function name and an argument for solving the goal. The component detector 10 detects a component that includes the function identified by the function name included in the goal. At this time, the component detector makes reference to the platform profile and a component identification information registered on the registration table of the component registration device 11 as shown in FIG. 9, and search for example, for a component for solving the given goal (a component identified by the function name included in the given goal). If such a component exists on the registration table, reference is made to the component profile of the component, to see an amount of memory to be used by the component, and detection is made for a component of a size within the memory size available for the platform 2. If more than one components exist for solving the given goal (if a plurality of components have the same function name), one component whose size is not greater than the memory size available for the platform 2 and whose processing time is the shortest is detected.

If the components registered on the registration table do not include one suitable for solving the given goal, an arrangement may be such that the component detector 10 makes direct access to profiles of the components not registered on the registration table so as to find a suitable component. In such an arrangement, if a suitable component is found, identification information of this particular component is registered on the registration table by the component registration device 11.

The registration table of the component registration device 11 may have registration of the component profile itself. For example, assume that the goal is to perform a process for connecting to Internet. Then assume further that there are two components for solving this goal: one is a component that executes a process of connecting to Internet via a dedicated communication line, and the other is a component that executes a process of connecting to Internet via a telephone line. In this case, if their respective memory uses are smaller than the size of memory available for the platform 2, and if the former has a shorter processing time, the former component is detected.

A component unique to the present embodiment is a planner component, which makes a plan, i.e. a plurality of solving methods each including a request (goal) for processing of at least one processing stage to be requested of the platform for solving a given goal (including a proposition inputted by the user). There are a plurality of planner components for each type of goals such as search, scheduling and agent migration.

Here, for the simplicity of description, a (search) planner component that makes a plurality of (web page) search plans will be described. The search planner component stores a plurality of plans using different search engines, in the form of e.g. a table. Further, for each of the plans, a priority is registered correspondingly to the profile of the plan. The priority is determined on the basis of an entire program size (kilo bytes) that includes all the programs expected to be used for the execution of the entire plan, a processing time (which depends on the ability of the CPU in the information terminal, i.e. an execution environment) necessary for the execution of the entire plan on the platform 2 on which the agent 1 is operating currently, and expected quality of search results which depends on the ability of search engines. As a result of receiving and processing the goal solution request, a plurality of plans and their profiles are sent back to the agent 1 via the platform 2, whereupon a registration of a plan tree is made on the agent 1, as well as a registration of a corresponding plan tree profile.

An input/output device 3 include a keyboard, a mouse and so on, through which the user makes an input of a proposition to the agent 1, and enters other requests, commands and so on to the information terminal. Further, the device also serves for displaying results of the processing made by the components, on a display screen (display device).

### (2) Processing Operation of the Information Processing Apparatus

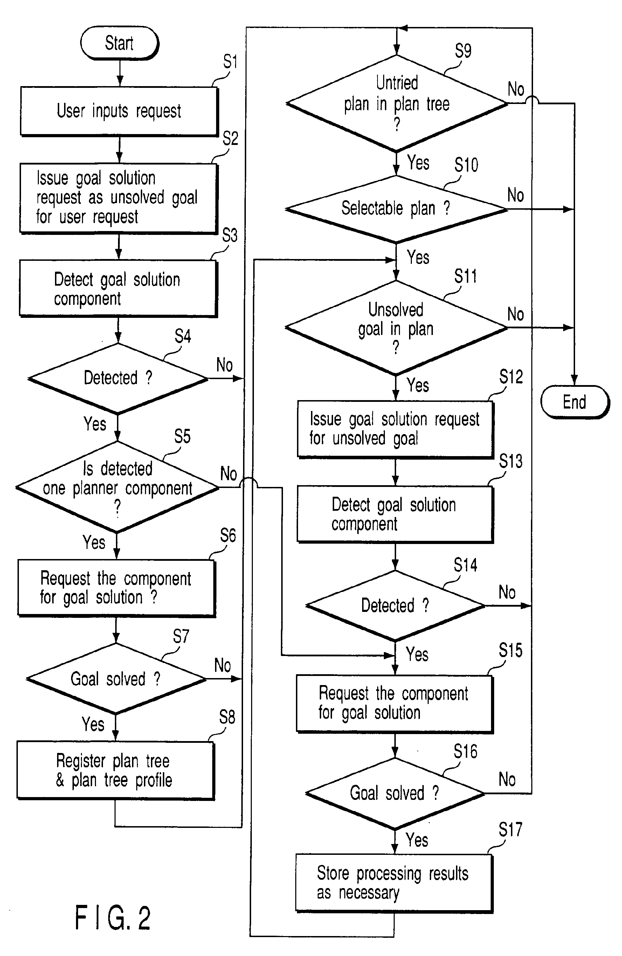

Reference will be made to a flowchart in FIG. 2, and an operation of the information processing apparatus in FIG. 1 will be described. Now, an assumption is made that the user has inputted to the agent 1 a proposition "Search for information, with Roman Empire as the search key." (Step S1). This proposition is, for example, converted into a combination of a function name of a planner component that makes a search plan and a search key "Roman Empire" as an argument for the function, and then stored in the storage 4. The plan tree controller 6 generates a goal solution request, with the inputted proposition as the first unsolved goal, and then outputs it to the component detector 10 (Step S2).

In order to detect a component for solving the given goal, the component detector 10 first searches components registered on the registration table for those that have the function name specified in the goal. If there is no such component found on the registration table, component profiles of other components residing on the platform 2 are directly accessed, whereby the search is continued for the component identified by the specified function name (Step S3).

If at least one component is found in such a way, a selection is made for one of these components that is executable within the memory capacity available for the platform 2. If the selection gives more than one components, then a component that has the shortest processing time is selected.

The component detector 10 detects a planner component that makes a search plan (Step S4, Step S5), and gives the goal solution request to this planner component (Step S6). As a result, the planner component makes a plurality of plans and their respective profiles as shown in FIGS. 3 and 4. These plans and profiles are sent, via the component detector 10, to the goal solution request manager 7 and the plan tree controller 6. The plans thus generated are stored at the plan tree storage 4 in the form of a plan tree for solving the given proposition. The profiles of the plans are, as shown in FIG. 6, stored at the plan tree storage 4 in the form of a plan tree profile (Step S7, Step S8).

Next, the agent 1 uses the plan tree controller 6 to check if there is any plan not selected yet (Step S9). If there is no plan that has not been selected (or if none of the existing plans could give a solution), the agent 1 ceases its operation. Otherwise, the plan tree controller 6 makes reference to the platform profile as shown in FIG. 7 and the plan tree profile as shown in FIG. 6, of the platform 2, and selects from a plurality of the plans on the plan tree a plan that has a program size loadable onto the memory currently available for the platform 2 and the shortest processing time or the highest priority (Step S9, Step S10).

Further, the plan tree controller 6 takes a goal that is not solved yet, out of the selected plan, and generates a goal solution request which includes description of the goal (at least component identification information) (Step S11, Step S12). If Step S11 finds no goal that is not solved yet, then this means that the agent 1 has solved all the goals and its mission to act for the user's request has been over. Thus, the agent 1 ceases its operation.

The goal solution request is sent via the goal solution request manager 7 to the component detector 10 in the platform 2. The component detector 10 makes reference to the given goal solution request and to each of the component identification information (e.g. function name) registered on the registration table, and checks if there is any component on the register that is identified by the component identification information (e.g. function name) contained in the goal solution request. If there is a registration, then the component detector 10 makes reference to the component profile and the platform profile of the identified component, and detects the component if it is executable within the memory capacity available for the platform 2. If there is a plurality of such components (i.e. if there is a plurality of components that have the same function name and are executable within the memory capacity available for the platform 2), then the component detector 10 selects one which has the shortest processing time, as a component suitable for solving the goal specified in the goal solution request.

If the registration table contains no component having the same function name as specified in the goal solution request, the component detector 10 makes direct access to component profiles of other components not registered on the registration table, thereby continuing the search for a suitable component (Step S13).

It should be noted here that when the component detector 10 detects a component suitable for solving the goal specified in the given goal solution request, there may be a mutual communication between the component detector 10 and the goal solution request manager 7 for making determinations.

If the component detector 10 has detected a component suitable for solving the goal (Step S14), then the goal solution request is given to the goal solution device 14 of the detected component, whereby the goal is solved (Step S15, Step S16). Resulting data from the solution (processing) by the goal solution device 14 is given from the platform 2 to the agent 1. For example, in the goal solution request manager 7 the processing result data for each goal is stored in a storage 8 (Step S17). The plan tree controller 6 deletes the solved goal (or attaches a flag that means "Solved"), and when all of the goals in the selected plan have been solved, deletes the plan. Then the operation goes back to Step S9, where the cycle described as the above is performed for another of the unsolved problems contained in the selected plan.

It should be noted that when detecting a component suitable for the given goal solution request, the component detector 10 may generate specifications of the necessary component (e.g. function name, program size and size of required work area for the operation) based on the goal solution request and the platform profile, and send the specifications to the component registration device 11. With this arrangement, the component registration device 11 searches for a component that fulfills the given specifications, and a component found is dynamically added.

If the detection has found no component suitable for solving the goal specified in the given goal solution request, or if the goal solution device 14 fails to solve the goal (Step S14), the agent 1 is informed of such a situation, and the operation goes back to Step S9, where the plan tree controller 6 in the agent 1 selects another plan (alternative plan) which has not been tried yet and can replace the plan that has failed, in the same way as described above (Step S10). If the alternative plan is selected, the operation goes to Step 11, where unsolved goals are sequentially taken out of the plan, and the process proceeds as has been described. On the other hand, if there is no alternative plan, then the agent aborts the process (Step S10).

### (3) Advantages of the First Embodiment

As has been described so far, according to the first embodiment, the proposition is solved by execution of the following processes: (1) A plurality of plans for solving a proposition inputted by the user are stored in advance in the agent 1. (2) The agent 1 selects from the stored plans a plan suitable for an execution environment (memory capacity and CPU ability) of the platform 2, and requests the platform 2 to execute each process contained in the selected plan. (3) Upon reception of the request, the platform 2 performs each of the requested processes thereby solving the proposition, by using a component executable within the execution environment of the platform. (An amount of memory used by the component (a total of a program size and a work area size) must be within a range of memory capacity given as the execution environment).

According to the present embodiment, the agent 1 can be run by e.g. a personal computer which is an information terminal under a favorable execution environment, provided with a platform including a component that makes a plurality of plans, a large memory capacity, and a highly powerful CPU. In addition, by registering a plurality of plans in the agent 1 in advance, even if the agent 1 has been moved onto e.g. a portable information terminal of a poor execution environment, provided only with a minimum necessary number of components (at least lacking a component that makes a plan (the planner component)), it is still possible to select from the stored plans an executable plan which is suitable for the execution environment of the particular portable information terminal. Therefore, it becomes possible to flexibly run the agent in each of different information terminals having different memory capacities and CPU abilities, in accordance with a given execution environment unique to the information terminal, thereby to process in autonomic the proposition given by the user.

### (Second Embodiment)

According to the first embodiment, when the agent 1 is run on any of the platforms 2 respectively built in information processing apparatuses having different execution environments, the agent 1 selects a plan which is executable within a given execution environment.

According to a second embodiment, each of the plans on the plan tree stored in the agent 1 is generated using agent knowledge stored in advance in the agent 1, by a planner component that generates a plurality of plans based on knowledge of the agent.

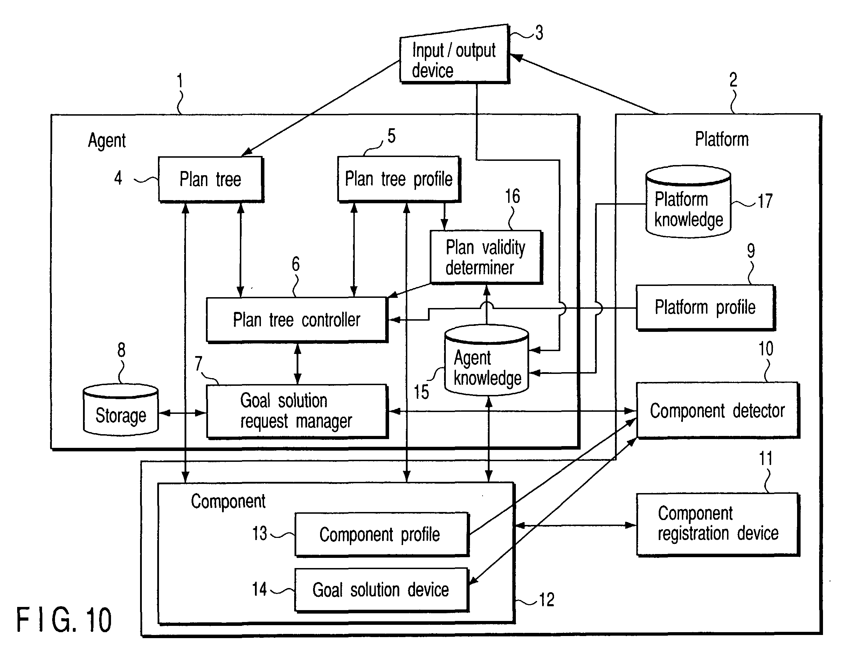

FIG. 10 shows a function configuration of an information processing apparatus according to the second embodiment. Note that components identical with those in FIG. 1 are indicated respectively by the same reference codes, and description will only cover differences in the configuration and operation of the information processing apparatus in FIG. 10 from the first embodiment shown in FIG. 1.

The agent 1 includes a storage 15 storing the agent knowledge, and a plan validity determiner 16 that checks if a currently stored plan is valid or void at a time when the agent knowledge stored in the plan profile storage 5 has been updated.

The agent knowledge may include knowledge set forth by the user as well as knowledge set forth based on platform knowledge stored in the platform 2. The agent knowledge set by the user includes for example, conditions on making plans such as; preference for processing time (priority on processing time) in making the plans (i.e. to make plans each having as short a processing time as possible), preference for the amount of execution environment (priority on resource saving) in making the plans (i.e. to make plans each executable by processing means (program) that occupies as small memory resource as possible), and preference for quality (priority on quality) in which quality of processed data in each plan is given priority in making the plans.

The platform 2 stores in a storage 17 platform knowledge, which is a list of information such as resource and functions that can be offered by the platform 2, and settings made by the user (in essence, a list of all or part of information about the execution environment of the platform 2). The agent 1 makes reference to such a platform knowledge, and sets fourth the agent knowledge that includes for example, functions available on the platform 2 (such as a speech processing function and video processing function), and component-related information such as about process configuration that the process in each of the components is divided into sub-processes, or integrated into major clusters.

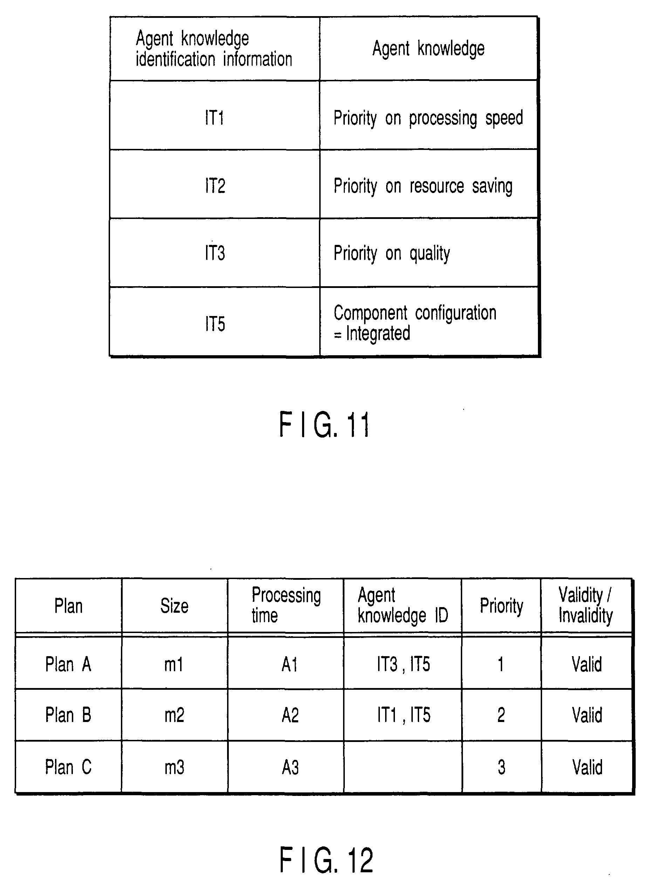

The agent 1 attaches identification information to each piece of the agent knowledge and makes storage in the form as shown in FIG. 11. The agent knowledge can be updated at any time by the user, and is updated every time the platform knowledge of the platform 2 is changed.

According to the second embodiment, further, there is a unique planner component 12. The planner component 12 has the same configuration as the planner component already described earlier, but performs a process slightly different from the process performed by the planner component 12 according to the first embodiment. Specifically, the agent knowledge of the agent 1 is utilized when making a plurality of plans. More specifically, according to the present embodiment, the planner component selects from the plurality of plans stored within itself, a plan correspondingly to each agent knowledge, adds, to the plan, identification information of the agent knowledge used as a selection standard (generation standard) for the selection, and sends it back to the agent 1 via the platform 2.

As has been described earlier for the first embodiment, according to the present embodiment again, upon reception of a goal solution request, the planner component 12 makes reference to the agent knowledge as shown in FIG. 11 and makes a plurality of plans for solving the given goal (i.e. herein, the proposition inputted by the user). Specifically, for example, according to FIG. 11, Plan A is draw up, using pieces of agent knowledge identified by the reference code "IT3" and "ITS". Further, Plan B is draw up, using pieces of agent knowledge identified by the reference code "IT1" and "ITS".

The plans thus made and the relevant profile information (size) for each of the plans are given to the agent 1. At this time, each of the profile information includes, not only the size and processing time as described above, but also the identification information of the agent knowledge used when making the plan. FIG. 12 shows an example of how storage of this profile of the plan tree profile is made in the agent 1. For example, in the state shown in FIG. 11, in which the agent knowledge of the agent 1 is not updated yet, plans currently stored in the agent 1 are all valid and selectable. Therefore, according to the plan tree profile shown in FIG. 12, all plans are labeled valid.

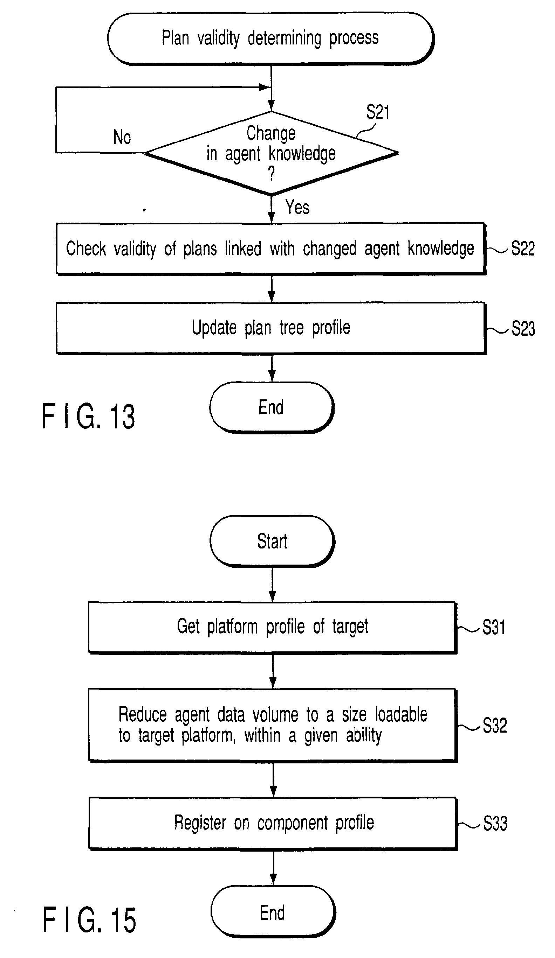

Let's take a case for example, that the user has deleted a piece of agent knowledge identified by the identification information "IT1" out of the agent knowledge shown in FIG. 11. Description will now cover how the agent 1 will response to such a condition, with reference to a flowchart shown in FIG. 13. When the agent knowledge has been updated (Step S21), the agent 1 has the plan validity determiner 16 discern if there is any plan invalidated due to the update of the agent knowledge. Specifically, in this case, if there is any plan made by using the agent knowledge that has been deleted, the plan (Plan B in this particular case) is discerned as invalid (Step S22). The plan found to be invalid is labeled as "invalid" on the plan tree profile. Alternatively, the profile itself of Plan B may be deleted.

Now, assume that the platform knowledge has been updated, and there has been a configuration change, for example, from a sub-divided configuration to an integrated configuration. A note should be made here for the terms "the component of the sub-divided configuration" and "the component of the integrated configuration". For example, in order to obtain a web page, it is necessary to first connect to Internet, and then to specify a URL thereby obtaining the desired web page. These two stages in the process are performed by a single component in the component of the integrated configuration. On the other hand, these two stages in the process are performed by different components in the component of the divided configuration.

Now, imagine that an update has been made to platform knowledge, and processing operation configuration has been changed from a sub-divided configuration to an integrated configuration. The change in the update is reflected onto the agent knowledge. For example, in the agent knowledge shown in FIG. 11, the agent knowledge identified by the identification information "ITS" is changed to a component identified by the identification information "IT4" which is a the sub-divided configuration. Along with this change, for example, each of the plans on the plan tree shown in FIG. 12 becomes un-executable on the current platform, and thus becomes "invalid" (though this is an extreme case), and therefore excluded from the selectable items.

According to the platform 2 which has the planner component, an arrangement may be such that upon updating of the agent knowledge, the planner component may receive a goal solution request of a goal that is the root for which the current plan tree has been made, and then newly makes a plurality of plans by using the updated agent knowledge, thereby updating the plan tree stored in the agent 1.

For example, when the platform 2 does not have a planner component due to a poor execution environment with limited memory resource such as in a portable information terminal, upon updating of the agent knowledge, the only operation performed is by the plan validity determiner 16 to discern whether each of the plans on the stored plan tree is valid or invalid. The invalidated plans are excluded from selectable items in Step S9 in FIG. 2.

As has been described so far, according to the second embodiment, each of the plans on the plan tree is managed with identification information for the relevant agent knowledge, on the plan tree profile. Therefore, if the agent knowledge is updated due to setting change by the user or change in the execution environment of the platform 2, the agent 1 makes an autonomous decision accordingly, discerning which of the plans in the stored plan tree should be excluded (invalidated) from selectable items. Therefore, the agent 1 is capable of selecting a suitable plan executable in a limited execution environment such as on a platform 2 built without a planner component, in an environment limited in the resource of memory such as in a portable information terminal. Therefore, it becomes possible to run the agent in each of information terminals having different memory capacities and CPU abilities, in accordance with a given execution environment unique to the information terminal, thereby to process in autonomic the proposition given by the user.

### (Third Embodiment)

The agent 1 is capable of operating on a platform built on an information processing apparatus (hereinafter called information terminal 100) as well as capable of being migrated onto another (or more) information processing apparatuses (hereinafter called information terminals 101), and operating as an agent on a platform built in the destination information terminal 101. The migrating operation will not be described in detail, but there is at least a need that certain specific data, i.e. the plan tree, the plan tree profile, and processing results for the goals stored in the storage 8, should be moved to and registered on the agent on the destination information terminal 101. Thus, the following description of the third embodiment will elaborate processing operation for transferring the specific data stored in the agent residing in the information terminal 100, for registration in the agent residing in the information terminal 101.

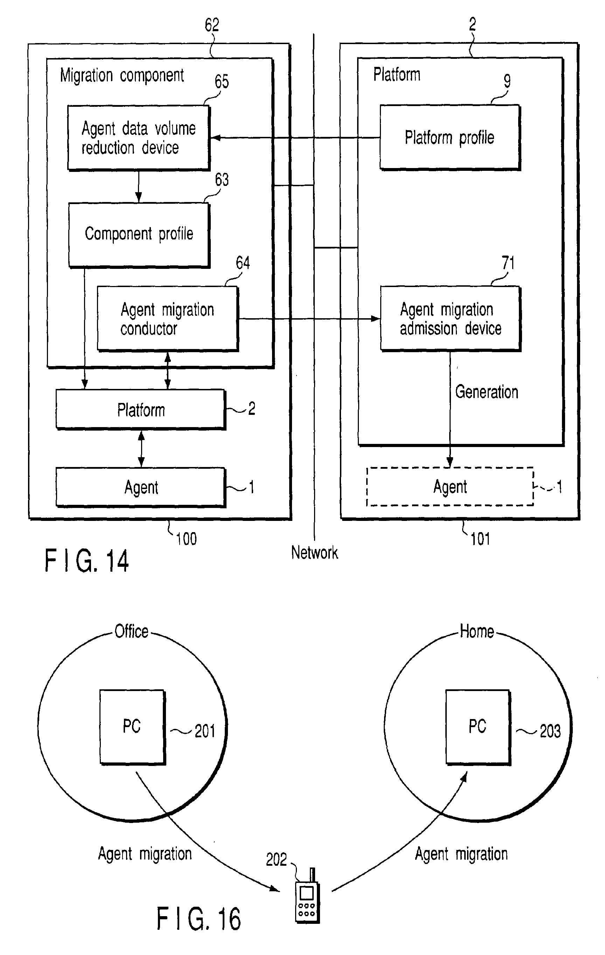

FIG. 14 shows principal portions respectively of function configurations of the information terminals 100, 101 involved in the transfer of the specific data stored in the agent residing the information terminal 100 for the registration in the agent residing in the information terminal 101. The information terminal 100 and the information terminal 101 are connected with each other via a predetermined network (such as Bluetooth, USB, and Ethernet).

In the third embodiment, at least the platform 2 of the information processing apparatus from which the specific data is transferred for the registration in the other information processing apparatus is provided with a component called migration component. The migration component is a component whose main task is to execute a process of reducing an amount of the specific data in the agent 1 residing on the platform 2 to a size suitable to an execution environment of the destination information processing apparatus.

Reference is made first to a flowchart shown in FIG. 15, to describe a processing operation of the migration component on the information terminal 100.

After the information terminal 100 and the information terminal 101 have been connected via a predetermined network, in each of the information terminals, the platform 2 is activated. At this time, an agent data volume reducer 65 of a migration component 62 on the information terminal 100 reads a platform profile in the counterpart information terminal 101 (Step S31). The agent data volume reducer 65 makes reference at least to a size of memory resource recorded in the platform profile, and performs the operation of reducing part of the specific data, or more specifically the data stored in the storage 8, within its data reducing capability, if the amount of the specific data is too large to be stored in the memory of the information terminal 101 (Step S32). The resulting amount of the specific data as a whole is stored in a component profile 63 of the migration component 62 as its own profile (Step S33). Alternatively, the migration component may give the size information of the memory resource of the destination information terminal 101, to the agent 1 via the platform 2. Further, the information terminal 100 may have a plurality of the migration components 62 each having a different size into which the data is reduced.

Next, assume that the user has inputted a proposition saying "Move from the information terminal 100 to the information terminal 101". A process that corresponds to this proposition is the same as shown in FIG. 2. Specifically, in this case, the given proposition is converted at least into a function name of the migration component and an argument if the function requires an argument, and then stored in the plan tree storage 4 (Step S1).

Alternatively, the inputted proposition may, for example, be converted into a function name of a planner component that makes a plurality of migration plans, and an argument if the function requires an argument, and then stored in the plan tree storage 4. In this case, first, Step S1 to Step S8 are performed. Then, the planner component that makes the migration plans makes a plan tree comprising a first plan including at least one goal containing e.g. at least a function name of the migration component and an argument if the function requires an argument, and a second plan including one or a plurality of goals for soliciting the user (or notifying the user). Of course, three or more plans may be made.

The plan tree controller 6 generates a goal solution request, using the given proposition or the first goal of the above first plan as an unsolved goal, and sends the request to the component detector 10 (Step S2).

In this case, the component detector 10 detects the migration component 62. However, if the platform 2 has a plurality of migration components each having a different size into which the data is reduced, the platform storage 9 of the destination information terminal 101 is read. Then, comparison is made between an amount of memory resource in the read data and at least an amount of specific data as after the volume reduction operation in each of the component profiles 63 of the migration components 62. In this way, a migration component 62 that reduces the specific data into a size loadable onto the memory area available for the platform 2 is selected. If there is a plurality of such migration components, further selection is made for a migration component having the largest amount of the specific data. (Alternatively, a migration component having the least amount may be selected.)

When the migration component 62 thus detected or selected is given the goal solution request (Step S3 to Step S5 and Step S15), the migration component 62 makes an agent migration conductor 64 send the specific data, which is the data after the reduction by the selected migration component 62, to the platform 2 of the destination information terminal 101, via the network (Step S16). This generally completes the processing operation of the information terminal 100.

The specific data sent from the information terminal 100 is received by an agent migration admission device 71 of the platform 2 in the information terminal 101. The agent migration admission device 71 registers the received specific data on the agent 1 residing in the platform 2 of the information terminal 101. Specifically, out of the specific data, the plan tree and the plan tree profile are respectively registered on the plan tree storage 4 and the plan profile storage 5 of the platform 2 in the information terminal 101, whereas the reduced data originally stored in the storage 8 of the agent 1 in the information terminal 100 is stored in the storage 8 of the agent 1 in the information terminal 101.

It should be noted here that the processing operation of selecting the migration component for the reduction of the specific data is not limited to the case described above. For example, each migration component on the information terminal 100 may obtain, for updating its own profile, a platform profile (at least an amount of memory resource) of the destination information terminal 101, and then gives this platform profile to the platform 2 in the information terminal 100. Then, upon reception of the goal solution request, the component detector 10 of the platform 2 makes comparison between the platform profile (the amount of memory resource) of the destination and the component profile of the migration component 62, thereby detecting or selecting an optimum migration component, in the same way as described above.

According to the third embodiment, when a specific data held by an agent residing in the information terminal 100 such as a personal computer is registered on an agent residing in the information terminal 101 which has a limited execution environment poor in memory resource such as a portable information terminal, and if an amount of the specific data is too large to be entirely registered on the information terminal 101, the information terminal 100 makes its migration component 62 reduce the specific data held by the agent 1. In other words, the plan tree, the plan tree profile, and part of processing results for goals accumulated in the storage 8 (specifically, processing results for goals accumulated in the storage 8), are reduced into a size to fit into the execution environment (i.e. to fit into an amount of memory resource) of the destination information terminal 101. More specifically, a plurality of migration components each having a different size into which the data is reduced are prepared in advance, and from these migration components, selection is made for one which performs the data reduction operation most suitably for the execution environment of the destination information terminal 101.

In such a way as described above, if the agent cannot be migrated, as a specific data currently held by the agent 1 in the information terminal 100 cannot be registered entirely on the agent 1 in the information terminal 101, reduction is made to the specific data held by the agent 1 in a way suitable to the execution environment of the destination information terminal 101. Specifically, data not relevant to a main operation (such as selecting of plans) of the agent, i.e. part of data (reproducible by the agent 1 through operation using the rest of the specific data) is deleted and then the reminder is registered on the information terminal 101.

If there is no suitable migration component 62 capable of reducing the data to fit to the execution environment of the information terminal 101, an arrangement should simply be that an alternative plan, for asking the user for an alternative or for notifying the user about the inability to migrate, is selected and executed.

The above arrangement enables to know in advance whether or not specific data held by the agent can be properly registered on a target information terminal (whether or not a migration of an agent is achievable). An arrangement may be such that the goal solution request manager finally communicates with the component detector, and tries another alternative goal if the migration is not possible.

The configurations and operations so far described for the first to the third embodiments are advantageous in the following situations. As shown in FIG. 16, assume that the user turns on a personal computer 201 at his office, activates the agent 1, and inputs to the agent 1 a proposition as in the first embodiment, that says, "Search for information, with Roman Empire as the search key." The user gets a relevant plan tree, a plan tree profile and processing results. The user can register these specific data on his portable information terminal (such as a PDA and a mobile telephone) 202. (In other words, the agent 1 can be migrated to the information terminal 202). On his way home, the user can activate the agent 1 on the portable information terminal 202. Further, getting back home, the user can once again migrate the agent finally to his personal computer 203 at home.

In this case, the personal computer 201 is represented by the information terminal 100 in FIG. 14, whereas the portable information terminal 202 is represented by the information terminal 101 in FIG. 14.

In order for the above described function to be realized, the platform 2 in the portable information terminal 202 must be provided with a minimum necessary number of components (at least the planner component may not be provided in most cases), at least a configuration such as shown in FIG. 1, and an agent migration admission device 71 such as shown in FIG. 14. Similarly, function of an agent operating on the platform 2 of the portable information terminal 202 has a configuration such as shown in FIG. 1. In other words, according to the portable information terminal 202, it is also possible for the user on his way back home for example, to make the agent 1 perform operations as shown in FIG. 2 that uses the stored plan tree, within a given execution environment.

Migration of the agent 1 from the portable information terminal 202 to the home personal computer 203 can be performed without taking consideration into an amount of memory resource, just as conventionally, by simply registering the entire data without reducing the specific data.

According to the embodiments as described above, the processes that the agent oneself must do are allocated to a plurality of components in the platform. These components execute processing of the agent at need.

As a result, the throughput of the agent is reduced. In this time, the agent checks how much respective components use resources, and the strategy that makes the component which use a few resources execute by priority is worked out. A plan tree is used to work out a strategy. This plan tree comprises a plan including some procedures to search the proposition "Roman Empire". When the goal in the plan is input to the component, the goal is solved with the component. When this goal is solved, another goal is read from the plan, and input to the component .In this way, when the goal of the plan is solved in turn and a result with respect to the proposition is obtained, this result is given to the agent. The agent is a subject to solve a proposition, and an actual process is performed by the component.

The embodiments of the present invention intend to process enough information by means of equipment of resource saving. Therefore, the agent oneself determines how much a component employs a memory source, and the agent selects the component which works with a few resources.

The methods described for the first to the third embodiments can also be stored and distributed as computer executable programs in the form of a DVD, a CD-ROM, a floppy disc, a solid memory, an optical disc, and other recording media.

The methods according to the embodiments of the present invention can also be stored and distributed as computer executable programs in the form of a magnetic disc (such as a floppy disc and a hard disc), an optical disc (such as a CD-ROM and DVD), and other recording media such as a semiconductor memory.

As has been described, the present invention enables to let an agent act flexibly in each of a plurality of information terminals having different execution environment such as memory resource and ability of the CPU, in accordance with each of the given execution environments.

## Claims

1. An information processing method of executing an information process to solve a provided preposition by at least one information processing apparatus having a resource, the method **characterized by** comprising:
preparing a plurality of plans to solve the preposition, each of the plans including at least one process step;
selecting one executable plan among the plans according to the resource of the information processing apparatus; and
executing the process step included in the selected plan.

2. A method according to claim 1, **characterized in that** the preparing step includes preparing the plans having resource conditions necessary for execution of plans.

3. A method according to claim 1, **characterized in that** the preparing step includes drawing up the plans based on conditions set by a user as a reference for creation of the plans or conditions determined by the resource of the information processing apparatus, and the selecting step includes determining at least one plan to be excluded from the plans to be selected, according to the conditions changed.

4. A method according to any preceding claim, **characterized by** including reducing, in quantity, specific data stored in one of a plurality of information processing apparatuses to adapt to the other thereof and registering the specific data reduced in quantity to said the other of the information processing apparatuses.

5. A method of performing an information processing by at least one information processing apparatus which has a platform executing a plurality of processes to solve a provided preposition, using an agent to request execution of the processes to the platform in stead of the user, the method **characterized by** comprising:
preparing, in the platform, the plurality of processes to solve the preposition;
sending a plurality of plans for execution of the processes from the platform to the agent to store them therein;
selecting, by the agent, one plan executable by the information apparatus from the plans; and
requesting execution of the process of the selected plan from the agent to the platform.

6. A method according to claim 5, **characterized in that** the preparing step includes preparing the plans having resource conditions necessary for execution of the plans.

7. A method according to claim 5, **characterized in that** the preparing step including drawing up the plans based on a condition set by a user as a reference for creation of the plans or a condition determined by the resource of the information processing apparatus, and the selecting step includes determining at least one plan to be excluded from the plans to be selected, according to the condition changed.

8. A method according to any of claims 5 to 7, which includes reducing, in quantity, specific data stored in one of a plurality of information processing apparatuses to adapt to the other thereof and registering the specific data reduced in quantity to said the other of the information processing apparatuses.

9. An information processing apparatus performing information processing by at least one information processing device which has a platform executing a plurality of processes to solve a provided preposition, using an agent to request execution of the processes to the platform in stead of the user, the method **characterized by** comprising:
planner means (9) for generating, in the platform, the plurality of processes to solve the preposition;
sending means (3) for sending a plurality of plans for execution of the processes from the platform to the agent to store them therein;
selection means (6) for selecting, by the agent, one plan executable by the information processing device from the plans; and
request means (7) for requesting execution of the process of the selected plan from the agent to the platform.

10. An apparatus according to claim 9, **characterized in that** the planner means (9) includes means for drawing up the planes having resource conditions necessary for execution of the planes.

11. An apparatus according to claim 9 or 10, **characterized in that** the planner means (9) includes means for drawing up the plans based on a condition set by a user as a reference for creation of the plans or a condition determined by the resource of the information processing device, and the selecting means (6) includes means for determining at least one plan to be excluded from the plans to be selected, according to the condition changed.

12. An apparatus according to any of claims 9 to 11, **characterized by** including means (64) for reducing, in quantity, specific data stored in one of a plurality of information apparatuses to adapt to the other thereof; and means for registering the specific data reduced in quantity to said the other of the information apparatuses.

13. An information processing apparatus performing an information processing by at least one information processing device which has a platform executing a plurality of processes to solve a provided preposition, using an agent to request execution of the processes to the platform in stead of the user, the apparatus **characterized by** comprising:
planning means (9) for generating, in the platform, the plurality of processes to solve the preposition;
sending means (3) for sending a plurality of plans for execution of the processes from the platform to the agent to store them therein;
selecting means (6) for selecting, by the agent, one plan executable by the information apparatus from the plans; and
request means (7) for requesting execution of the process of the selected plan from the agent to the platform.

14. An apparatus according to claim 13, **characterized in that** the planning means (9) generates the plans having resource conditions necessary for execution of the plans.

15. An apparatus according to claim 13 or 14, **characterized in that** the planning means (9) includes means for drawing up the plans based on a condition set by a user as a reference for creation of the plans or a condition determined by the resource of the information processing device, and the selection means (6) includes a function determining at least one plan to be excluded from the plans to be selected, according to the condition changed.

16. An apparatus according to any of claims 13 to 15, **characterized by** further reduction means (65) for reducing, in quantity, specific data stored in one of a plurality of information processing devices to adapt to the other thereof and registers the specific data reduced in quantity to said the other of the information processing devices.

17. A method of performing an information processing by at least one information processing apparatus which has a platform executing a plurality of processes to solve a provided preposition, using an agent to request execution of the processes to the platform in stead of the user, the method **characterized by** comprising:
executing a plurality of processes to solve the preposition;
sending a plurality of plans for execution of the processes to the agent to store it therein; and
receiving a request for execution of the process of one plan executable by the information processing apparatus from the agent.

18. An information processing apparatus performing an information processing by at least one information processing device which has a platform executing a plurality of processes to solve a provided preposition, using an agent to request execution of the processes to the platform in stead of the user, the apparatus **characterized by** comprising:
execution means (12) for executing a plurality of processes to solve the preposition;
sending means (3) for sending a plurality of plans for execution of the processes to the agent to store it therein; and
means (10) for receiving a request for execution of the process of one plan executable by the information processing device from the agent.

19. A method of performing an information processing by at least one information processing device which has a platform executing a plurality of processes to solve a provided preposition, using an agent to request execution of the processes to the platform in stead of the user, the method **characterized by** comprising:
storing a plurality of plans for execution of the plurality of processes to solve the preposition;
selecting one plan executable by the information processing device from the plans; and
requesting execution of the process of the selected plan to the platform in stead of the user.

20. An information processing apparatus performing an information processing by at least one information processing device which has a platform executing a plurality of processes to solve a provided preposition, using an agent to request execution of the processes to the platform instead of the user, the apparatus **characterized by** comprising:
means (4) for storing a plurality of plans for execution of the plurality of processes to solve the preposition;
means (6) for selecting one plan executable by the information processing device from the plans; and
means (7) for requesting execution of the process of the selected plan to the platform in stead of the user.

21. A carrier medium carrying computer readable instructions for controlling the computer to carry out the method of any one of claims 1 to 8, 17 and 19.
